# EUROPÄISCHE PATENTSCHRIFT

(11) **EP 2 961 261 B1**
(45) Veröffentlichungstag und Bekanntmachung des Hinweises auf die Patenterteilung: **18.10.2017**
(21) Anmeldenummer: 13810878.2
(22) Anmeldetag: 31.10.2013
(51) Int. Cl.: A01G 27/04

(54) **VORRICHTUNG ZUR PFLANZENBEWÄSSERUNG**
DEVICE FOR WATERING PLANTS
DISPOSITIF D'IRRIGATION DE PLANTES

(30) Priorität: 28.02.2013 AT 501332013
(43) Veröffentlichungstag der Anmeldung: 06.01.2016
(73) Patentinhaber: Pendelin, Wilfried, 4470 Enns (AT)
(72) Erfinder: Pendelin, Wilfried, 4470 Enns (AT)
(74) Vertreter: Jell, Friedrich
(86) Internationale Anmeldenummer: PCT/AT2013/050208
(87) Internationale Veröffentlichungsnummer: WO 2014/131065

(56) Entgegenhaltungen:
- WO-A1-00/25573
- WO-A1-00/49854
- DE-A1- 10 003 837
- GB-A- 2 018 117
- GB-A- 2 198 324
- GB-A- 2 281 182

## Beschreibung

### Technisches Gebiet

Die Erfindung betrifft eine Vorrichtung zur Pflanzenbewässerung mit einer Wanne zur Aufnahme von Flüssigkeit, mit einem über dem Wannenboden der Wanne vorgesehenen Träger, mit einer auf dem Träger vorgesehenen kapillaren Matte, mit einer an der Matte anschließenden flüssigkeitsdurchlässigen Folie, die eine Stellfläche zur Bewässerung der Pflanze ausbildet, und mit mindestens einem an die Matte anschließenden kapillaren Verbindungselement zur Aufnahme von Flüssigkeit der Wanne.

### Stand der Technik

Um eine autarke Bewässerung von Pflanzen zu ermöglichen, sind aus dem Stand der Technik Vorrichtungen bekannt, die zu diesem Zweck kapillare Mittel einsetzen. So schlägt die GB2281182A vor, eine kapillare Matte über einen Träger vom Wannenboden zu beabstanden und mit kapillaren Verbindungselementen zu verbinden, um damit Flüssigkeit der Wanne aufnehmen zu können. Die kapillare Matte wird von einer flüssigkeitsdurchlässigen bzw. perforierten Folie abgedeckt, die eine Stellfläche für die Pflanze ausbildet, sodass die Pflanze Flüssigkeit aus der Matte ziehen kann. Nachteilig hängt das kapillare Verbindungselement über Öffnungen des Trägers frei in die Flüssigkeit über dem Wannenboden, weshalb solch eine Konstruktion im Falle deren Bewegung, beispielsweise durch ihren Transport oder einer Änderung ihres Aufstellorts, Nachteile aufweist - etwa durch ein ungewolltes Verrutschen der Matte. Des Weiteren kann mithilfe einer derartigen, bekannten Vorrichtung eine gezielte Einstellung des Ausmaßes der Bewässerung nicht oder nur schwer gewährleistet werden.

Die gleichen Nachteile sind auch bei anderen Konstruktionen zu erwarten (WO00/25573A), bei denen auf kapillare Verbindungselemente verzichtet und Randseiten der kapillaren Matte in die Flüssigkeit hängen.

Das Dokument DE10003837A1 offenbart eine Vorrichtung gemäß dem Oberbegriff des Anspruchs 1.

### Darstellung der Erfindung

Es ist daher die Aufgabe der Erfindung, ausgehend vom Eingang geschilderten Stand der Technik eine Vorrichtung zu schaffen, die standfest eine autarke und in ihrem Grad einstellbare Bewässerung einer Pflanze auch bei mobiler Verwendung sicherstellen kann. Zudem soll diese Vorrichtung konstruktiv einfach und kostengünstig herstellbar sein.

Die Erfindung löst die gestellte Aufgabe dadurch, dass der Träger mindestens eine starre Leitung ausbildet, die vom kapillaren Verbindungselement ausgefüllt ist.

Weist der Träger eine Leitung auf, kann dieser Träger zur einfachen und sicheren Führung des kapillaren Verbindungselements genutzt werden. Es kann nämlich damit ein Träger für den kontinuierlichen und konstanten Transport von Flüssigkeit der Wanne zur kapillaren Matte zur Verfügung gestellt werden, die nicht nur mechanisch belastbar, sondern auch vergleichsweise unabhängig gegenüber Erschütterungen, Bewegung der Vorrichtung im Zuge ihres Verstellens etc. ist - die Verbindungselemente können so vor einem Verrutschen zueinander und in weiterer Folge auch gegenüber der Wanne weitgehend gesichert werden. Eine standfeste, autarke Bewässerung für Pflanzen kann somit auch bei einer mobilen Verwendung der Vorrichtung sichergestellt werden, auch dann, wenn die kapillare Matte keinen direkten Kontakt mit der Flüssigkeit der Wanne hat bzw. über dem Flüssigkeitsspiegel der Wanne angeordnet ist. Eine besonders standfeste und vor allem auch konstruktiv einfache Vorrichtung kann sich ergeben, wenn der Träger die Leitung ausbildet und/oder die Leitung vom kapillaren Verbindungselement ausgefüllt ist. Somit ist die Eintauchposition des kapillaren Verbindungselements in der Flüssigkeit der Wanne selbst bei hohen Bewegungsbelastungen sichergestellt. Zudem kann mit der zur Matte und zur Flüssigkeit hin offenen Leitung sichergestellt werden, dass das kapillare Verbindungselement mit Flüssigkeit der Wanne sowie mit der kapillaren Matte verbunden bzw. mit diesen in Kontakt ist. In weiterer Folge kann des Weiteren auch eine gleichmäßige Bewässerung der Stellfläche erreicht werden. Besonders zeichnet sich die erfindungsgemäße Vorrichtung durch die einfach bereitzustellende Einfassung des kapillaren Verbindungselements aus, indem die Leitung vom kapillaren Verbindungselement ausgefüllt ist. Dadurch, dass der Träger vorzugsweise die Leitung ausbildet, ist zudem eine Reduktion an Bauteilen der Vorrichtung und somit mit einer Kostenreduktion erreichbar. Vorteilhaft kann des Weiteren durch die Anpassung der Anzahl an Leitungen, deren Größe hinsichtlich ihres Durchmessers, der Eigenschaften der kapillaren Verbindungselemente etc. eine vergleichsweise genaue Abstimmung des Ausmaßes des Flüssigkeitstransports aus der Wanne zur Aufstellfläche ermöglicht werden.

Ist der Träger rostförmig ausgebildet, können sich unter anderem Vorteile aufgrund konstruktiver Einfachheit ergeben. Diese Gitterrostform kann beispielsweise die Wartung - etwa das Auffüllen der Wanne mit Flüssigkeit, die Prüfung des Wasserstands, die Reinigung der Vorrichtung etc. vereinfacht erfolgen. Vorstellbare Gitterrostformen können beispielsweise Leitungen mit einem runden, ovalen, rechteckigen, quadratischen, wabenförmigen, etc. Querschnitt ausbilden.

Verjüngt sich die Leitung in Richtung des Wannenbodens konzentrisch, kann die Menge an kapillarer Flüssigkeitsübertragung zur Matte eingestellt, wodurch sich die die erfindungsgemäße Vorrichtung auch durch vielseitige Anwendbarkeit - entsprechend der für die jeweilige Pflanzenart erforderliche Zufuhr an minimaler und/oder maximaler Wassermenge - auszeichnen kann. Des Weiteren kann auf diese Weise eine vergleichsweise flächendeckende, gleichmäßige Versorgung der auf dem Träger vorgesehenen kapillaren Matte sichergestellt werden.

Um eine sichere und in ihrem Ausmaß konstante, bestimmbare Aufnahme von Flüssigkeit aus der Wanne zu erreichen, kann vorgesehen sein, dass die Leitung in einer Öffnung vor dem Wannenboden endet. Auf diese Weise kann nämlich erreicht werden, dass sich eventuell in der Wanne vorhandene Verunreinigungen nicht oder zumindest in geringerem Ausmaß auf die kapillare Flüssigkeitsübertragung auswirken.

Eine gleichmäßige Benetzung der Matte mit Flüssigkeit aus der Wanne kann erreicht werden, wenn der Träger über seine Erstreckung gleichmäßig verteilt angeordnete Leitungen aufweist.

Weist der rostförmige Träger an mindestens einem Knotenpunkt seiner Stege eine Leitung auf, ist deren einfache Positionierung bzw. auch deren einfaches Vorsehen gesichert. Nicht zuletzt kann dadurch die Standfestigkeit der kapillaren Verbindung gegenüber Verlagerungen aufgrund von Bewegungskräften erhöht werden. Die Vorrichtung kann sich daher auch für eine mobile Verwendung besonders eignen.

Schließt der Träger mit seinen Stegen an der Seitenwand der Wanne an, können unter anderem die Steifigkeit der Wanne erhöht und die Positionierung der Leitung mit dem kapillaren Verbindungselement vereinfacht werden. Schließt der Träger mit seinen Stegen zudem zumindest teilweise am Wannenboden an, ist dieser Vorteil weiter verbessert.

Laufen die bereichsweise einander zulaufenden Seitenflächen der Stege in einer ebenen Auflagefläche für die Matte aus, kann die Kontaktfläche der Matte mit dem Träger reduziert werden, ohne die Stabilität der Vorrichtung zu beeinträchtigen. Vorteilhaft kann die Matte durch einen Träger trotzdem in ausreichendem Ausmaß gestützt, wobei möglichen unerwünschten Auswirkungen des Aufliegens - etwa eventueller Schimmelbildung - entgegengewirkt wird.

Ist der Träger als entnehmbarer Wanneneinsatz ausgebildet, können die Konstruktionsverhältnisse der Vorrichtung weiter vereinfacht werden. Außerdem ist die Wartung der Vorrichtung erheblich vereinfacht, beispielsweise zu Reinigungszwecken. Zudem kann auf diese Weise ermöglicht werden, die Vorrichtung schnell und einfach - etwa durch Einsätze mit unterschiedlich stark ausgeprägtem kapillarem Flüssigkeitstransport - an die jeweiligen Erfordernisse, Bedürfnisse von Pflanzen etc. anzupassen.

Besteht das kapillare Verbindungselement aus einem Dochtmaterial, können dessen erhöhte kapillare Kräfte genützt werden, für eine ausreichende Flüssigkeitsübertragung zu sorgen. Insbesondere Glasfasern können sich hierbei auszeichnen - beispielsweise aufgrund ihrer hohen Lebensdauer.

Für reduzierte Kosten kann sorgen, wenn die kapillare Matte eine Filzmatte aufweist, insbesondere daraus besteht.

Um dünnwandige Träger mechanisch zu verstärken, kann vorgesehen sein, dass die kapillare Matte ein mit dem Träger stoffschlüssig verbundene Vliesmatte aufweist. Auf dieser Vliesmatte kann dann eine zur Vliesmatte dickere Filzmatte der kapillaren Matte vorgehen sein, welche dickere Filzmatte dann im Wesentlichen für die Verteilung der aufgenommen Flüssigkeit sorgt.

### Kurze Beschreibung der Zeichnung

In den Figuren ist beispielsweise der Erfindungsgegenstand anhand mehrerer Ausführungsbeispiele näher dargestellt. Es zeigen
- Fig. 1: eine Draufsicht auf eine Vorrichtung zur kapillaren Bewässerung einer Pflanze,
- Fig. 2: eine Schnittansicht nach II-II der Fig. 1,
- Fig. 3: eine vergrößerte Detailansicht der Fig. 2,
- Fig. 4: eine Draufsicht auf eine weitere Vorrichtung zur kapillaren Bewässerung einer Pflanze und
- Fig. 5: eine Schnittansicht nach V-V der Fig. 4.

### Weg zur Ausführung der Erfindung

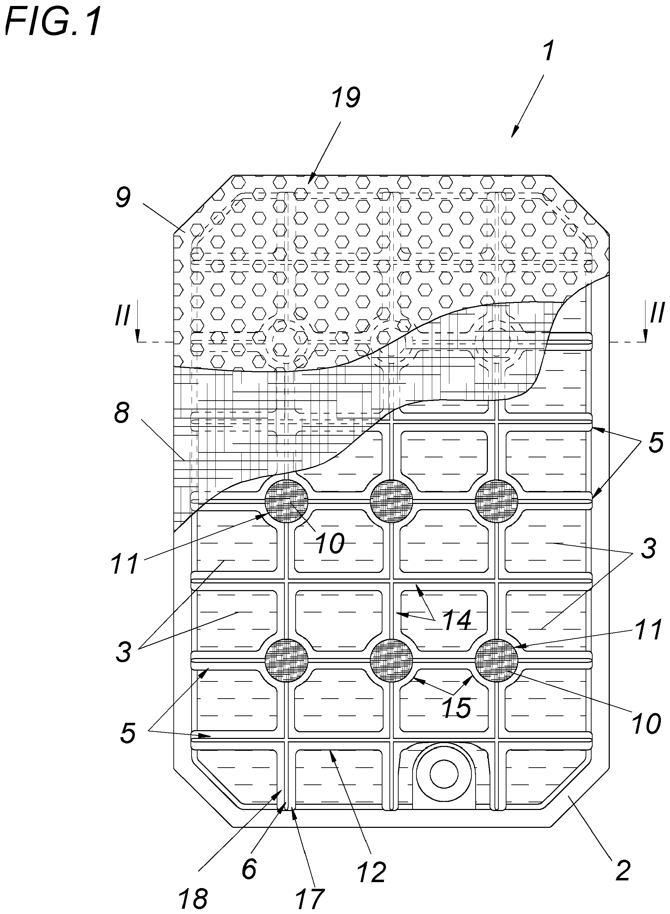

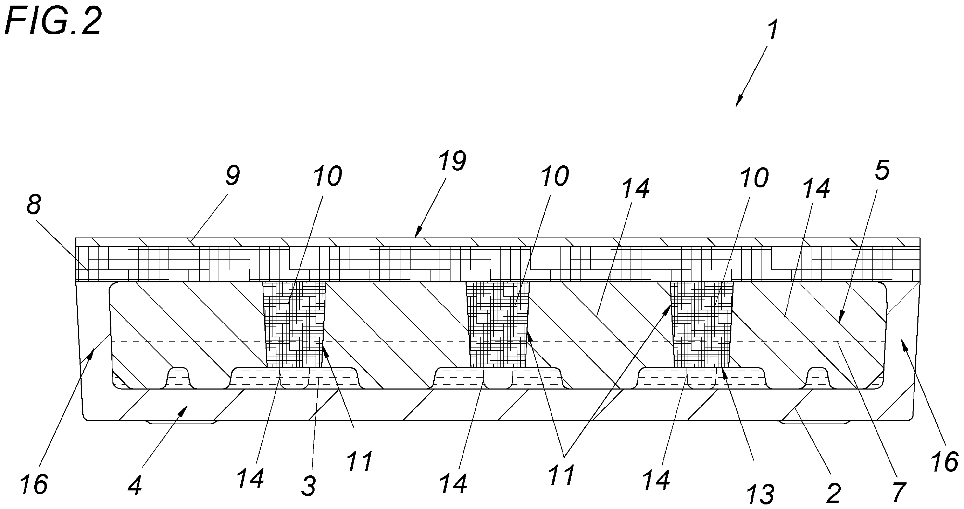

Die beispielsweise nach den Figuren 1 und 2 dargestellte Vorrichtung 1 weist eine Wanne 2 zur Aufnahme von Flüssigkeit 3 auf, mit der eine nicht näher dargestellte Pflanze bewässert wird. Diese Pflanze wird auf einen über dem Wannenboden 4 der Wanne 2 vorgesehen Träger 5 der Vorrichtung 1 gestellt, und zwar auf seine ebene Auflagefläche 6, die über dem Flüssigkeitsspiegel 7 der Wanne 2 liegt. Zwischen dem Träger 5 und der Pflanze ist eine kapillare Matte 8 vorgesehen, an die eine flüssigkeitsdurchlässige bzw. perforierte Folie 9 anschließt. Die Folie 9 bildet in weiterer Folge die Stellfläche 19 der Pflanze aus, die über die Vorrichtung 1 bewässert wird. Um die kapillare Matte 8, die über dem Spiegel 7 der Flüssigkeit 3 der Wanne 2 liegt, mit Flüssigkeit 3 zu versorgen, ist ein kapillares Verbindungselement 10 vorgesehen, das sowohl in die Flüssigkeit 3 der Wanne 2 ragt als auch an der kapillaren Matte 8 anliegt. Das kapillare Verbindungselement 10 kann damit Flüssigkeit 3 der Wanne 2 aufnehmen und an die kapillare Matte 8 kontinuierlich weiterleiten, welche Flüssigkeit 3 dann über die Folie 9 an die Pflanze bzw. deren Wurzelwerk abgegeben wird. Diese Flüssigkeit 3 kann beispielsweise aus Wasser gemischt mit einem Düngemittel bestehen.

Erfindungsgemäß bildet der Träger 5 Leitungen 11 aus, die vom kapillaren Verbindungselement 10 ausgefüllt sind, wie dies in der Fig. 2 insbesondere erkannt werden kann. Der Träger ist gitterrostförmig ausgeführt, wobei die kegelstumpfförmigen Leitungen 11 je an Knotenpunkten 15 der Stege 14 vorgesehen sind. Damit ist eine besonders hohe mechanische Belastbarkeit der Vorrichtung 1 gegeben, die sich zudem dadurch erhöht, dass der Träger 5 mit seinen Stegen 14 am Wannenboden 4 und an den Seitenwänden 16 der Wanne 2 anschließt.

Durch die zur Matte 8 und zur Flüssigkeit 3 hin offenen Leitungen 11 ist gewährleistet, dass das kapillare Verbindungselement 10 mit Flüssigkeit 8 in Kontakt bleibt und keine Austrocknung erfährt. Vorteilhaft enden die Leitungen 11 in Öffnungen 13 vor dem Wannenboden 4, um damit unempfindlicher gegenüber Verschmutzungen am Wannenboden 4 zu sein, wodurch gerade bei niedrigem Wasserstand Verkrustungen an den Leitungen 11 und somit Einschränkungen des Wassertransports vermieden werden. Auf diese Weise sind einfache und standfeste Bauweisen sichergestellt.

Eine besonders standfeste Vorrichtung ergibt sich dadurch, dass die Leitungen 11, wie in Fig. 2 ersichtlich, starr ausgeführt sind. Bewegungsbedingte Verlagerungen der kapillaren Verbindungselemente 10 sind somit ausgeschlossen, wodurch sich die Vorrichtung insbesondere für Anwendungen eignet, in deren Zuge diese bewegt wird. Aus dem Stand der Technik bekannte Verschiebungen der Teile der Vorrichtung zur Bewässerung einer Pflanze und damit einhergehende Störungen bzw. Beeinträchtigungen in ihrer Funktion sind somit nicht zu erwarten.

Als kapillaren Verbindungselements 10 ist ein Dochtmaterial, insbesondere Glasfaser, vorstellbar. Im Allgemeinen wird erwähnt, dass die Verbindungselemente 10 auch unterschiedliche Abmessungen, insbesondere hinsichtlich ihres Durchmessers, aufweisen können - abhängig beispielsweise von ihrer Anordnung auf dem gitterrostförmigen Träger 5.

Wie in Fig. 2 weiter zu sehen ist, bildet der Träger 5 die Leitung 11 aus, wodurch ein einstückiger Wanneneinsatz 12 entsteht, der die konstruktive Einfachheit der erfindungsgemäßen Vorrichtung 1 unterstreicht. Außerdem ist der Wanneneinsatz 12 entnehmbar, was zahlreiche Vorteile hinsichtlich Wartung - etwa Reinigung - und variabler Einsatzmöglichkeit durch einfachen und schnellen Austausch des Rahmens 5 - wenn erforderlich gegen Rahmen mit unterschiedlich starkem Wassertransport - ermöglicht.

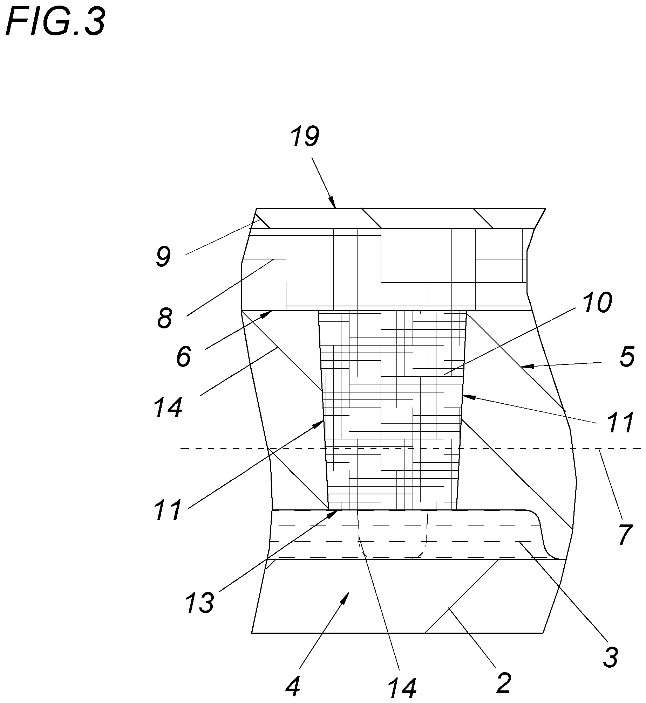

Da sich die Leitung 11 in Richtung des Wannenbodens 4 konzentrisch verjüngt, was der Fig. 3 besser entnommen werden kann, wird die Saugwirkung des kapillaren Verbindungselements 10 zusätzlich verstärkt. Zudem weist der Träger 5 gleichmäßig verteilt vorgesehene Leitungen 11 auf. Somit kann durch die Vorrichtung ein erhöhter Flüssigkeitstransport zur, aber auch eine vergleichsweise gleichmäßige Versorgung und Verteilung von Flüssigkeit auf der Matte 8 ermöglicht werden.

Der gitterrostförmige Träger 5 bildet eine unterbrochene Auflagefläche 6 aus, wobei die ebenen Auflageflächen 6 zusätzlich durch bereichsweise zulaufende Seitenflächen 17, 18 der Stege 14, die in der ebenen Auflagefläche 6 auslaufen, klein gehalten werden. Dadurch ist eine ausreichende Hinterlüftung der Matte 8 gewährleistet - Ansammlungen von Wasser zwischen Stegen 14 und Matte 8 bzw. die damit einhergehende Gefahr für Schimmelbildung somit reduziert.

Die kapillare Matte 8 der Fig. 1 besteht aus einer Filzmatte 20, wobei auch andere kapillare Einzelmatten denkbar sind.

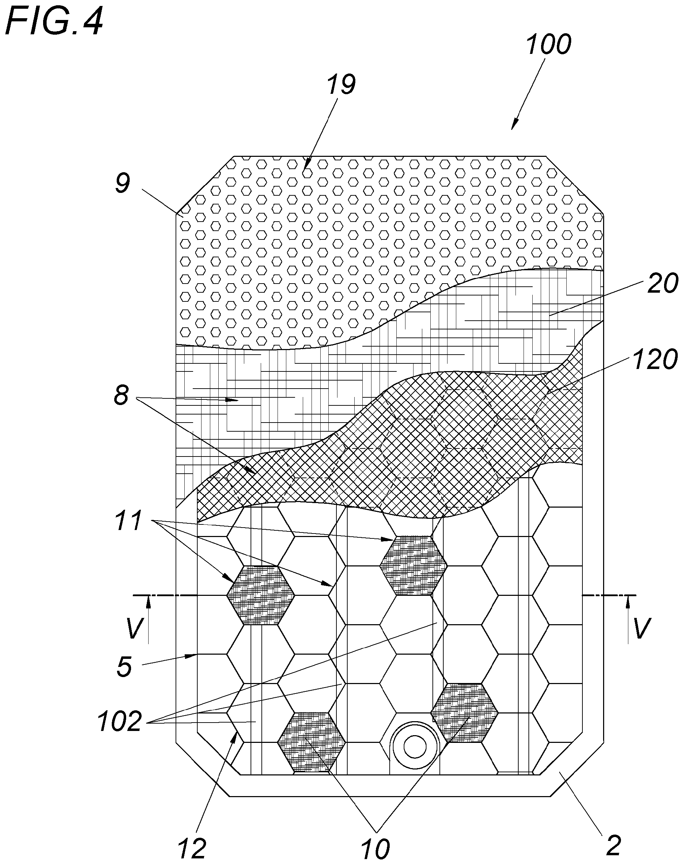

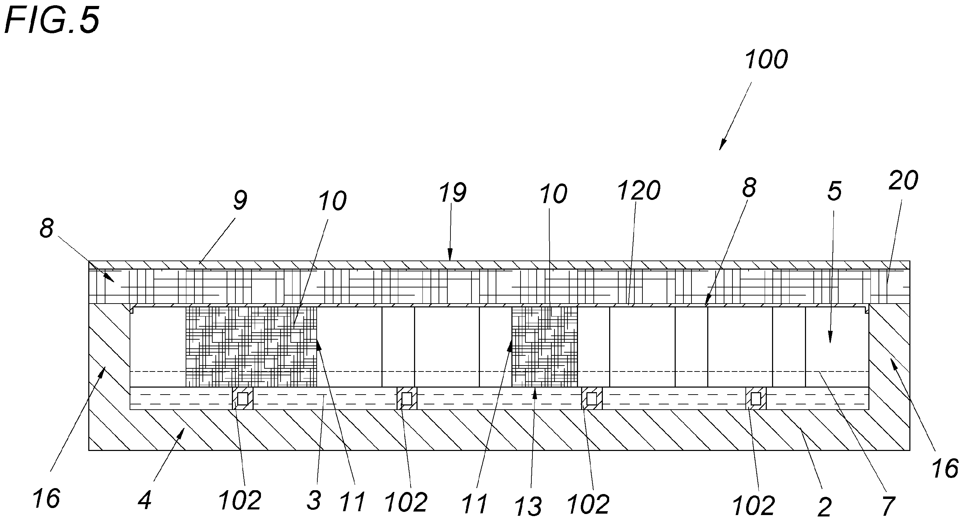

Eine andere in den Figuren 4 und 5 dargestellte Ausführungsform der Vorrichtung 100 hat im Gegensatz zum Ausführungsbeispiel nach Fig. 1 und Fig 2. einen oben und unten offenen, wabenförmig strukturierten Träger 5, der gitterrostförmig aufgebaut ist. Dabei wird der Träger durch geschlossene Profile 102 vom Wannenboden 4 der Wanne 2 auf Abstand gehalten. Zudem weist die Vorrichtung 100 eine zweiteilige kapillare Matte 8 auf, nämlich eine Filzmatte 20 und darauf eine Vliesmatte 120. Der Träger 5 ist mit der Vliesmatte 120 stoffschlüssig verbunden, insbesondere damit verklebt, was dessen wabenförmig strukturierte Gitterrostform mechanisch stabilisiert. Die Verwendung eines dünnwandigen Trägers ist so möglich, was eine leichtere und preisgünstigere Vorrichtung 100 schafft.

Auch in diesem Ausführungsbeispiel ist über dem Träger 5 und der kapillaren Matte 8 eine flüssigkeitsdurchlässige bzw. perforierte Folie 9 anschließt vorgesehen. Diese Folie 9 bildet in weiterer Folge die Stellfläche 19 einer hier nicht näher dargestellten Pflanze aus, die über die Vorrichtung 100 bewässert wird.

Der Träger 5 formt hier in Form der einzelnen Waben viele starre Leitungen 11 aus, die nach oben und unten offen sind. In einigen der Waben ist ein kapillares Verbindungselement 10 vorgesehen, das sowohl in die Flüssigkeit 3 der Wanne 2 ragt als auch an die flüssigkeitsdurchlässige Vliesmatte 120 der kapillaren Matte 8 anschließt. Über die Folie 9 kann somit die Flüssigkeit 3 der Wanne 2 an die Pflanze bzw. zu deren Wurzelwerk gelangen.

Da bei der Vorrichtung 100 jede Wabe eine starre Leitung 11 ausbildet, ist eine besonders flexible Auswahl und gleichzeitig einfache Konfiguration der kapillaren Verbindungselemente 10 möglich. So kann der wabenförmig strukturierte Gitterrost mit zusätzlichen kapillaren Verbindungselementen 10 bestückt werden, falls Pflanzen einen erhöhten Flüssigkeitsbedarf bedürfen.

Im Allgemeinen wird erwähnt, dass die kapillare Matte 8 aus einer Vielzahl von übereinander liegenden Einzelmatten mit diversesten Materialien bestehen kann, wobei sich hierfür insbesondere Fasermaterialien bewähren können.

## Patentansprüche

1. Vorrichtung zur Pflanzenbewässerung mit einer Wanne (2) zur Aufnahme von Flüssigkeit (3), mit einem über dem Wannenboden (4) der Wanne (2) vorgesehenen Träger (5), mit einer auf dem Träger (5) vorgesehenen kapillaren Matte (8), mit einer an der Matte (8) anschließenden flüssigkeitsdurchlässigen Folie (9), die eine Stellfläche (19) zur Bewässerung der Pflanze ausbildet, und mit mindestens einem an die Matte (8) anschließenden kapillaren Verbindungselement (10) zur Aufnahme von Flüssigkeit (3) der Wanne (2), wobei der Träger (5) mindestens eine starre Leitung (11) ausbildet, die das kapillare Verbindungselement (10) aufweist, **dadurch gekennzeichnet, dass** die starre Leitung (11) vom kapillaren Verbindungselement (10) ausgefüllt ist.

2. Vorrichtung nach Anspruch 1, **dadurch gekennzeichnet, dass** der Träger (5) rostförmig ausgebildet ist.

3. Vorrichtung nach Anspruch 1 oder 2, **dadurch gekennzeichnet, dass** sich die Leitung (11) in Richtung des Wannenbodens (4) konzentrisch verjüngt.

4. Vorrichtung nach Anspruch 1, 2 oder 3, **dadurch gekennzeichnet, dass** die Leitung (11) in einer Öffnung (13) vor dem Wannenboden (4) endet.

5. Vorrichtung nach einem der Ansprüche 1 bis 4, **dadurch gekennzeichnet, dass** der Träger (5) gleichmäßig verteilt angeordnete Leitungen (11) aufweist.

6. Vorrichtung nach einem der Ansprüche 2 bis 5, **dadurch gekennzeichnet, dass** der rostförmige Träger (5) an mindestens einem Knotenpunkt (15) seiner Stege (14) eine Leitung (11) aufweist.

7. Vorrichtung nach Anspruch 6, **dadurch gekennzeichnet, dass** der Träger (5) mit seinen Stegen (14) an der Seitenwand (16) und/oder am Wannenboden (4) der Wanne (2) anschließt.

8. Vorrichtung nach Anspruch 6 oder 7, **dadurch gekennzeichnet, dass** die bereichsweise einander zulaufenden Seitenflächen (17, 18) der Stege (14) in einer ebenen Auflagefläche (6) für die Matte (8) auslaufen.

9. Vorrichtung nach einem der Ansprüche 1 bis 8, **dadurch gekennzeichnet, dass** der Träger (5) als entnehmbarer Wanneneinsatz ausgebildet ist.

10. Vorrichtung nach einem der Ansprüche 1 bis 9, **dadurch gekennzeichnet, dass** das kapillare Verbindungselement (10) aus einem Dochtmaterial, insbesondere aus Glasfaser, besteht.

11. Vorrichtung nach einem der Ansprüche 1 bis 10, **dadurch gekennzeichnet, dass** die kapillare Matte (8) eine Filzmatte (20) aufweist.

12. Vorrichtung nach Anspruch 11, **dadurch gekennzeichnet, dass** die kapillare Matte (8) ein mit dem Träger (5) stoffschlüssig verbundene Vliesmatte (120) aufweist, auf der die zur Vliesmatte (120) dickere Filzmatte (20) vorgesehen ist.

## Claims

1. Device for watering plants having a tub (2) for receiving liquid (3), having a support (5) provided above the tub bottom (4) of the tub (2), having a capillary mat (8) provided on the support (5), having a liquid-permeable film (9) connected to the mat (8), which forms a floor surface (19) for watering the plant, and having at least one capillary connecting element (10) connected to the mat (8) for receiving liquid (3) of the tub (2), wherein the support (5) forms at least one rigid conduit (11), which has the capillary connecting element (10), **characterised in that** the rigid conduit (11) is filled by the capillary connecting element.

2. Device according to claim 1, **characterised in that** the support (5) is formed grate-shaped.

3. Device according to claim 1 or 2, **characterised in that** the conduit (11) is tapered concentrically in the direction of the tub bottom (4).

4. Device according to claim 1, 2 or 3, **characterised in that** the conduit (11) ends in an opening (13) in front of the tub bottom (4).

5. Device according to any one of claims 1 to 4, **characterised in that** the support (5) has conduits (11) arranged uniformly distributed.

6. Device according to any one of claims 2 to 5, **characterised in that** the grate-shaped support (5) has a conduit (11) on at least one node (15) of its bars (14).

7. Device according to claim 6, **characterised in that** the support (5) connects with its bars (14) to the side wall (16) and/or to the tub bottom (4) of the tub (2).

8. Device according to claim 6 or 7, **characterised in that** the regionally mutually converging side surfaces (17, 18) of the bars (14) terminate in a planar contact surface (6) for the mat (8).

9. Device according to any one of claims 1 to 8, **characterised in that** the support (5) is formed as a detachable tub insert.

10. Device according to any one of claims 1 to 9, **characterised in that** the capillary connecting element (10) consists of a wicking material, in particular of glass fibres.

11. Device according to any one of claims 1 to 10, **characterised in that** the capillary mat (8) has a felt mat (20).

12. Device according to claim 11, **characterised in that** the capillary mat (8) has a fleece mat (120) materially connected to the support (5), on which the with respect to the fleece mat (120) thicker felt mat (20) is provided.

## Revendications

1. Dispositif d'arrosage de plantes avec un récipient (2) destiné à accueillir un liquide (3), avec un support (5) prévu au-dessus du fond (4) du récipient (2), avec une natte capillaire (8) prévue sur le support (5), avec un film perméable au liquide (9) contigu à la natte (8) qui forme une surface (19) pour arroser la plante, et avec au moins un élément de liaison capillaire (10) contigu à la natte (8) destiné à accueillir du liquide (3) du bassin (2), le support (5) formant au moins une conduite rigide (11) qui comporte l'élément de liaison capillaire (10), **caractérisé en ce que** la conduite rigide (11) est remplie d'éléments de liaison capillaire (10).

2. Dispositif selon la revendication 1, **caractérisé en ce que** le support (5) est en forme de grille.

3. Dispositif selon la revendication 1 ou 2, **caractérisé en ce que** la conduite (11) s'amincit concentriquement dans la direction du fond (4) du récipient.

4. Dispositif selon la revendication 1, 2 ou 3, **caractérisé en ce que** la conduite (11) s'achève par une ouverture (13) devant le fond (4) du récipient.

5. Dispositif selon l'une des revendications 1 à 4, **caractérisé en ce que** le support (5) présente des conduites (11) disposées en répartition régulière.

6. Dispositif selon l'une des revendications 2 à 5, **caractérisé en ce que** le support (5) en forme de grille présente une conduite (11) à au moins un élément de jonction (15) de sa traverse (14).

7. Dispositif selon la revendication 6, **caractérisé en ce que** le support (5) avec ses traverses (14) est raccordé à la paroi latérale (16) et/ou au fond (4) du récipient (2).

8. Dispositif selon la revendication 6 ou 7, **caractérisé en ce que** les surfaces latérales (17, 18) de la traverse (14), qui convergent par endroits, se terminent par une surface d'appui horizontale (6) de la natte (8).

9. Dispositif selon l'une des revendications 1 à 8, **caractérisé en ce que** le support (5) est constitué de l'insertion d'un récipient extractible.

10. Dispositif selon l'une des revendications 1 à 9, **caractérisé en ce que** le support (10) est constitué d'un matériau à effet de mèche, en particulier de fibres de verre.

11. Dispositif selon l'une des revendications 1 à 10, **caractérisé en ce que** la natte capillaire (8) présente une couche de feutre (20).

12. Dispositif selon la revendication 11, **caractérisé en ce que** la natte capillaire (8) présente une couche de non-tissé (120) liée par adhérence de matériau au support (5), sur laquelle est prévue une couche de feutre (20) plus épaisse que la couche de non-tissé (120).
